Europäisches Patentamt

European Patent Office

Office européen des brevets

(11) Publication number: **0 078 083**
**B1**

# EUROPEAN PATENT SPECIFICATION

(45) Date of publication of patent specification: **18.03.87**

(21) Application number: **82201316.5**

(22) Date of filing: **21.10.82**

(51) Int. Cl.⁴: **H 01 G 1/147, H 01 G 13/00, H 01 C 17/28**

(54) Process and plate for processing miniature electronic components.

(30) Priority: **22.10.81 US 313785**
**22.10.81 US 313950**

(43) Date of publication of application:
**04.05.83 Bulletin 83/18**

(45) Publication of the grant of the patent:
**18.03.87 Bulletin 87/12**

(84) Designated Contracting States:
**AT BE CH DE FR GB IT LI NL SE**

(56) References cited:
**GB-A- 984 495**
**US-A-4 102 043**
**US-A-4 115 600**

(73) Proprietor: **PALOMAR SYSTEMS AND MACHINES, INC.**
**621 South Andreasen Drive**
**Escondido California 92025 (US)**

(72) Inventor: **Braden, Denver**
**7203 Manzanita Street**
**Carlsbad California 92008 (US)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

## Description

The invention relates to a process of coating ends of a multiplicity of like miniature electronic parts, i.e. capacitors or resistors, comprising the steps of loading the parts into a multiplicity of juxtaposed parallel passageways arranged in a body, by pushing said parts into said passageways until their first ends are exposed at a first end of said passageways while continously gripping the sides of said parts, coating the exposed first ends of said parts, and coating the exposed second ends of said parts. The invention also relates to a plate supporting a multiplicity of miniature electronic parts, i.e. capacitors or resistors, used in coating both ends of the parts, comprising a plate-like body having a multiplicity of juxtaposed parallel passageways extending from face to face of said body, each passageway having at least one cross-section dimension shorter than the corresponding cross-sectional dimension of each part.

Such a process and plate are known from US—A—4115600. In this patent a process and a plate are described in which a multiplicity of capacitors or resistors are mounted in a multiplicity of juxtaposed parallel passageways arranged in a rotatable disk. The axes of all miniature electronic parts are all essentially parallel to each other and to the axis of rotation of the disk. The mounting is such that the first ends of said parts are exposed at a first end of said passageways. Subsequently said first ends are sprayed with low melting temperature metals while the disk is rotated. A shield plate is offset with respect to the axis of rotation to expose each region of said first ends to the sprayed metal for substantially less than the full period of a revolution of the disk. In this way the ends of said parts are subjected to metal sprayed disposition for approximately half of each period of revolution and are cooled during the other half of each period of revolution. The other second ends of said miniature electronic parts can be exposed in order to be coated simultaneously with the coating of the first end or in an additional step. Thereby another shield place is mounted adjacent and spaced from the other end of said disk.

The plate-like disk has to be rotated while a shield plate is used for effecting a spraying and a cooling period respectively.

In coating such miniature components the following features, in accordance with the invention, are desirable to be achieved:

a) To process parts economically in terms of time and coats, i.e., to process parts in batches of hundreds in each operation.

b) To produce as few defective parts as is feasible and to readily detect defects.

c) To utilize relatively economical, low maintenance, easily operated, long life equipment.

It is the object of the invention to provide such a process and plate to process such components having the above features.

In accordance with the invention this is attained in a process of the above type by an additional step, after coating the exposed first ends, of pushing said parts in said passageways until their second ends are exposed at a second end, opposite said first end, of said passageways while continuously gripping the sides of said parts, after which second pushing step the second coating step occurs, the length of said passageways being greater than the length of said parts between said ends to be coated.

In order to perform above process the plate in accordance with the invention is characterized in that said passageways have resilient walls from end to end of said passageways, and said resilient walls continuously resiliently grip said parts at their sides in all positions in said passageways whether protruding from either end of said passageways or whether completely contained within said passageways.

Time saving with the above process and plate-like body is the primary advantage of the same.

The invention will be best understood, together with additional objectives and advantages thereof, from the following description, read with reference to the drawings, in which:

Figure 1 is an exploded perspective view of a specific embodiment of some of the equipment used in the invention.

Figure 2 is a fragmentary vertical sectional view, on enlarged scale, showing partly the same equipment as figure 1.

Figure 3 is a partial vertical sectional view.

Figure 4 is a perspective view. Certain structure is broken away to reveal structure otherwise hidden.

Figure 5 is a partial vertical sectional view.

Figure 6 is a view like figure 5 but with some parts in different positions.

Figure 7 is an enlarged, fragmentary plan view.

Figure 8 is an elevational schematical representation of some processing equipment.

Figure 9 is an enlarged perspective view of an electronic component with a coating on one end.

Figure 10 is a view like Figures 5 and 6 with some parts in different positions.

Figure 11 is a fragmentary vertical section showing an inverted part handling plate.

Figure 12 is a view like Figures 5, 6 and 10 but with some parts in different positions.

Figure 13 is a partial sectional view of parts being unloaded from a part unloading plate.

Figure 14 is like Figure 9 but showing a coating on both ends of the electronic components.

Figure 15 is like Figure 7 only showing rectangular configurations of parts and passageways.

Figure 16 is a fragmentary perspective view, partly in section, further showing the rectangular configuration of Figure 15.

Figure 17 is like Figure 15 only showing toothed passageway sidewalls.

## Detailed Description

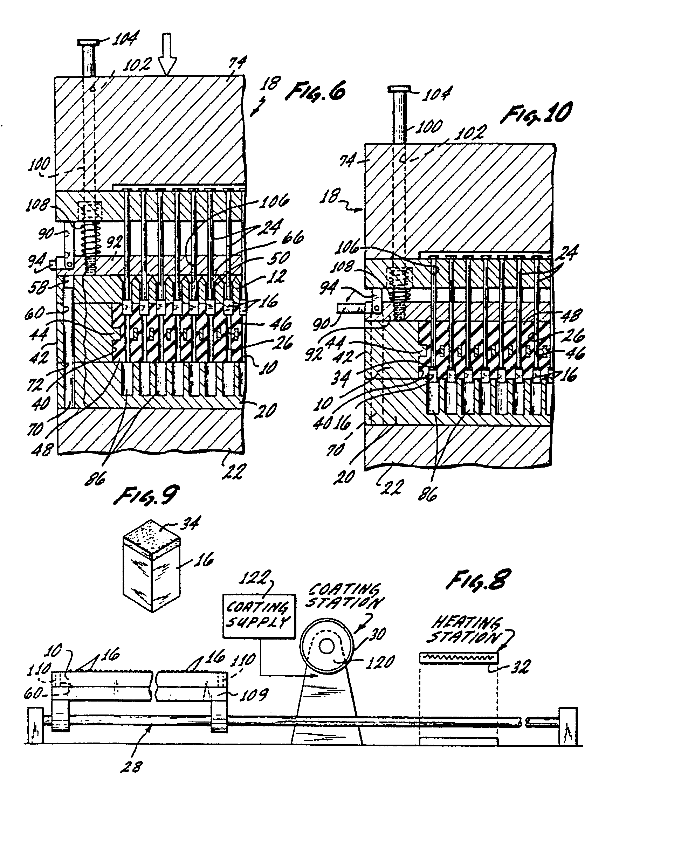

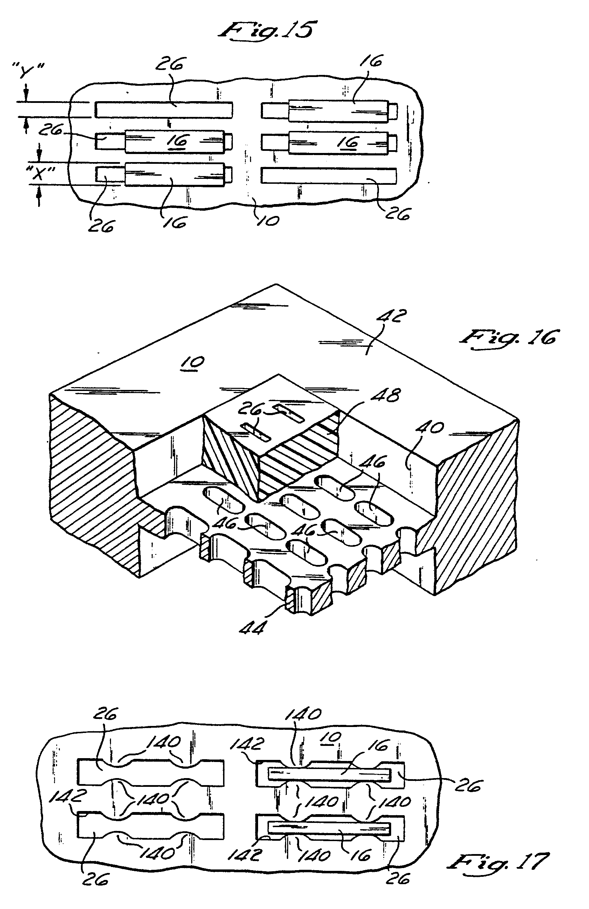

The purpose of the processing and equipment is to conduct certain operations on parts, especially to apply to the ends of a miniature electronic component 16, in sequence, coatings 34, 36. Figure 9 shows the part with coating 34 and Figure 14 shows the addition of coating 36.

Part 16 could be a chip capacitor or a resistor for example. In size, an example would be around 1/16 × 1/16″ (1,6 × 1,6 mm) in cross-section and 3/32 to 5/32″ (2,38 to 3,97 mm) long but the part could be larger or smaller than that. The construction of such a miniature capacitor or resistor will be understood by those skilled in the art. A capacitor, for example, has a sizable number of conductive layers separated by non-conductive layers. Conductive layers are interfingered as to electrical connection of layers to opposite ends of part 16. In any case, such miniature part 16 needs to have conductive coatings applied to opposite ends and my invention concerns that operation.

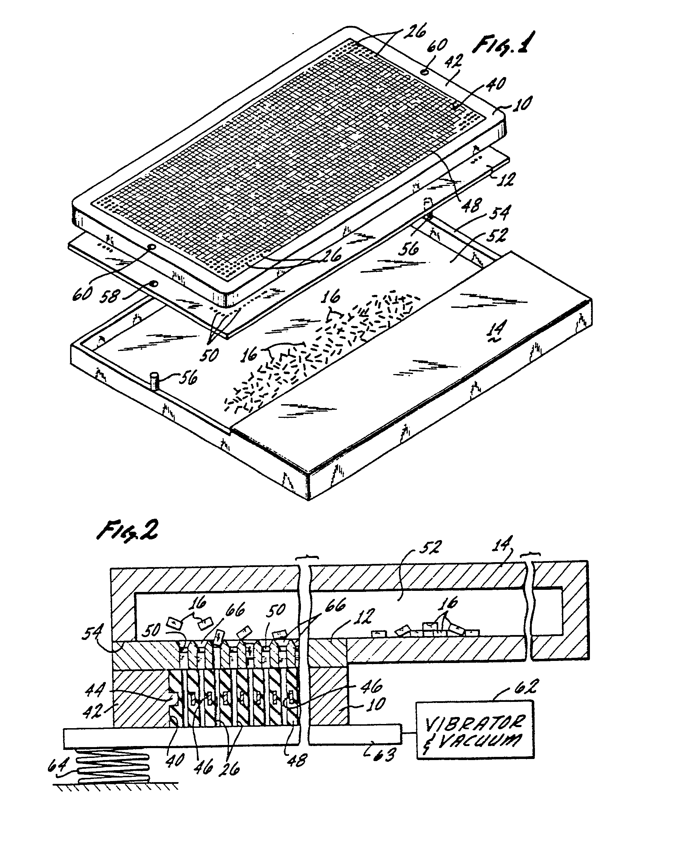

The drawings show sequence of operations. Figure 1 includes, from top to bottom, a part handling plate 10, a part loading plate 12, and a part feeding body 14. Figure 2 adds schematically the functions of vibration, vacuum and spring mount to the Figure 1 parts to load parts in plate 12. Figure 3 shows part loading plate 12 and part handling plate 10 with electronic components 16 in place in plate 12.

Figure 4 shows part punching means 18 used (a) to transfer parts 16 from part loading plate 12 to part handling plate 10, (b) used to transfer parts 16 from one side of part handling plate 10, and used to unload parts 16 from part handling plate 10.

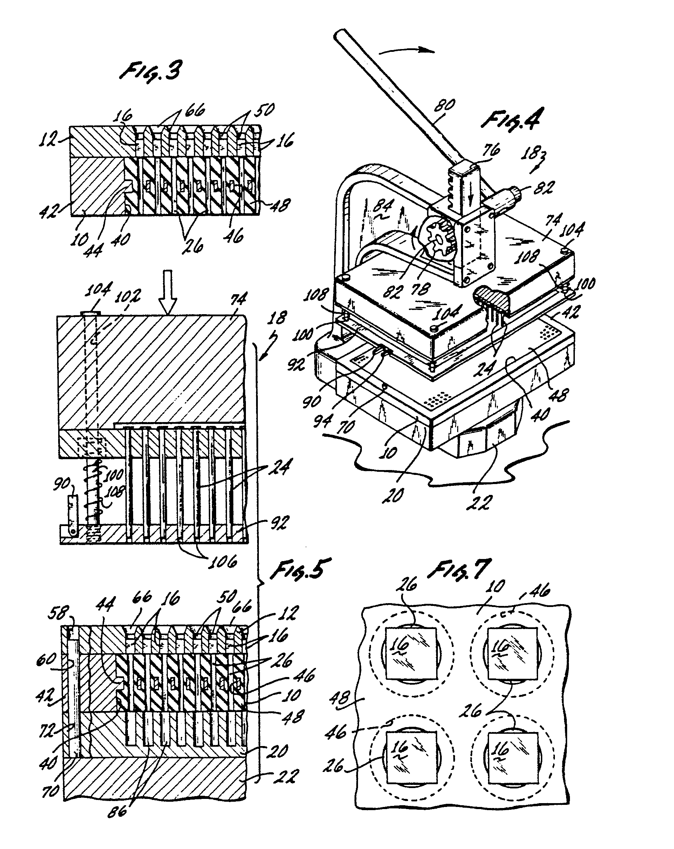

Figure 5 shows a step in the sequence of operations involving part pushing means 18. A bank of pushers 24 is shown in the upper part of the view, and plates 10, 12, a part unloading plate 20, and part pushing base 22 are shown in the lower part of the view. Figure 6 is like Figure 5 but with the pushers 24 of part pushing means 18 in the process of pushing parts 16 out of part loading plate 12 and into part handling plate 10. The ends of parts 16 are exposed above the upper face of plate 10.

The method of handling parts 16 shown involves resiliently gripping parts in the part receiving passageways 26 in part handling plate 10. Figure 7 illustrates resilient gripping of parts. Parts 16 usually are right-rectangular (square or rectangular in cross-section) whereas passageways 26 are round and normally have a diameter less than the maximum cross-sectional dimension of parts 16. The walls of passageways 26 are resiliently coated to accommodate and grip parts 16.

Figure 8 shows equipment for processing a part handling plate 10 having the ends of electronic components 16 exposed above its upper face. The equipment includes conveying means 28, part coating equipment 30, and part heating equipment 32, used to coat ends of arts 16 and to bake such coatings. Figure 9 shows coating 34 applied to a first end of a part 16.

Figure 10 is like Figure 6 but with part handling plate 10 inverted, after applying coating 34 and returning plate 10 to part pushing press 18. Parts 16 are being moved by pushers 24 into position exposing their second ends beyond the second face of plate 10, so that the second ends can be coated. Figure 11 shows plate 10 inverted from its Figure 10 position with the second ends of the parts 16 exposed, ready to run through the Figure 8 coating equipment.

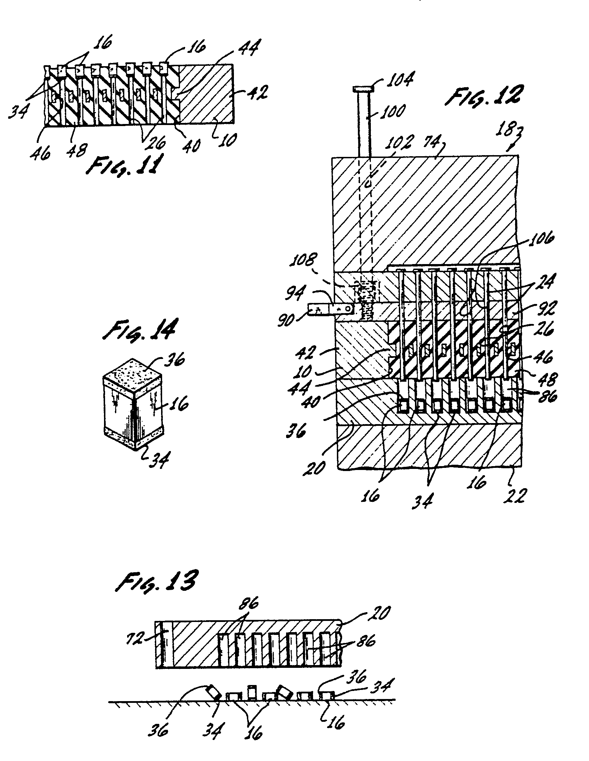

Figure 12 shows part pushing press 18 in the process of unloading parts from plate 10 into part unloading plate 20. Figure 13 shows parts 16 being dumped out of plate 20. Figure 14 shows part 16 with a coating 36 on its second end in addition to coating 34 on its first end.

In the class of miniature electronic components needing conductive coatings to be applied to their ends, probably about 95% of those produced by component manufacturers are 0.050″ (1,27 mm) to 0.200″ (5,08 mm) in length (a little more than 3/64″ (1,20 mm) to a little more than 3/16″ 4,76 mm). Although some longer parts are produced, at present only that range of lengths are processed on the equipment disclosed herein. Plates 10 presently produced are about 0.350″ (8,89 mm) (3/8″ is 0.375″ 10,23 mm). It is preferred that the length of each passageway will be at least 150% of the maximum length of parts to be handled therein. Reasons to fabricate plates 10 of at least about that thickness include (a) to provide sufficient strength, including sufficient strength of the central web 44 and (b) to be able to accommodate most lengths of parts 16. Parts 16 are continuously gripped by resilient walls in passageways 26 in plate 10 as they are moved to a first position exposing one end of parts 16 for coating and to a second position exposing the opposite end of part 16 for coating and as they are unloaded. The resilient coating of the walls of passageways 26 extends from face to face of plate 10.

The foregoing description describes some of the principal operations and equipment involved in my invention. I will now review them in more detail.

A basic part of my processing system is part handling plate 10. It has a multiplicity of part receiving passageways 26 having walls coated with resilient material. I will now describe my preferred structure of plate 10. It is formed of metal with a recess 40 in each face extending throughout the major portions of the face to the marginal areas 42. This leaves a central web 44 of metal which has a multiplicity of bores 46. A resilient plastic material 48 is used to fill recesses 40 and bores 46 except for leaving part receiving passageways 26. Material 48 provides resilient walls for passageways 26, to receive and grip parts in the manner particularly illustrated in Figure 7. The material 48 can be selected from various applicable plastics or rubbers. An example is a pliable silicone rubber. Those skilled in the art will understand the selection of applicable materials and methods, tooling, etc., to form plate 10. In the claims when material 48 is described as "resilient plastic" that term is defined to include plastics or natural or artificial rubbers which are suitable for the usage. The purpose of having recesses 40 (rather than merely to coat bores 46) is to better hold the plastics material 48 in place.

Parts 16 usually will be square or rectangular in cross-section. Even if the parts 16 were circular in cross-section, the action of the walls of passageways 26 in gripping parts 16 would be similar. If the circular diameter of each passageway 26 is rectangular in cross-section a dimension of passageway 26 such as its width should be less than the corresponding minimum dimension of part 16 such as the width of a rectangular part in order to continuously resiliently grip part 16 in all positions in passageway 26 whether part 16 protrudes from an end passageway 26 or whether part 16 is centered or otherwise completely contained in passageway 26.

The basic method of handling parts 16 in passageways 26 consists of (a) inserting the parts into the passageways, (b) moving the parts so first ends are exposed beyond the face of plate 10, i.e., Figures 6 and 8, and (c) moving parts 16 so the second ends are exposed beyond the second face of the plate 10, i.e., Figures 10 and 11. The exposed ends of parts 16 are coated by the equipment shown in Figure 8 after steps (b) and (c) above.

In will now deal with the insertion of parts 16 into passageways 26 of part handling plate 10. The part loading plate 12 and the part feeding body 14 and the use of vibration and vacuum to insert parts 16 in the holes 50 of plate 12 follow practices used before in the prior art.

Part receiving body 14 has a hopper cavity which receives the electronic components 16 in bulk. An open face 54 of cavity 52 is covered by part loading plate 12 and part handling plate 10 that are oriented by alignment pins 56 on body 14 which extend through alignment openings 58, 60 in plates 12, 10 respectively. Components 16 are loaded in cavity in the manner demonstrated in Figure 1. Then the assembly is inverted as shown in Figure 2. As the application of vibration and vacuum 62 to a vibrator base 63 and the use of suitable spring mounts 64 for base 63 are old and familiar expedients in the art to load parts in a plate like part loading plate 12, I will only observe that vacuum is applied to the lower ends of passageways 26 to help fill holes 50 in plate 12 with parts 16 as the assembly is being vibrated. Following common practices, holes 50 are slightly larger than parts 16 but not so large that they will fit in any way but with their longitudinal axis vertical, so that they will be presented in end-forward directions to passageways 26. The upper ends 66 of holes 50 are flared to more readily receive parts 16. Holes 50 could be circular or rectangular in cross-section as the only orientation required of parts 16 is that they be presented in an end-forward direction. The action of filling holes will be slightly faster if holes 50 are circular in cross-section. To give an example, in one sized load plate 12, 2145 holes 50 were 100% filled with parts 16 in 8—10 seconds. In a larger size, there were 4233 holes 50.

Part pushing means 18 is a form of press and includes a base 22 having upstanding alignment pins 70 that fit into alignment openings 72 in part unloading plate 20, into alignment openings 60 in part handling plate 10 and into alignment openings 58 in part loading plate 12 to hold the plates in proper alignment.

The upper parts of press 18 includes an upper plate 74, a rack 76 upstanding from plate 74, a pinion 78 engaged with rack 76, and a pivotally mounted handle 80 secured to a common shaft 82 with pinion 78 and rotating pinion 78 when handle 80 is manually pivoted to force upper plate 74 up and down. The bearing for shaft 82 is supported by an arm 84 upstanding from base 22.

Suitably mounted on upper press plate 74 in depending position is a bank of pin pushers 24 mating with openings 50 in part loading plate 12, mating with passageways 26 in part handling plate 10, and mating with a multiplicity of recesses 86 in part unloading plate 20. As handle 80 is operated, parts 16 are forced from positions in holes 50 of plate 12 into passageways 26 in plate 10. The first position of parts 16 in passageways 26 is shown in the sequence of Figures 5—6 to leave the upper ends of parts 16 in a plane above the upper face of plate 10 so that they can be coated. Stop 90 pivotally mounted on stripper plate 92 can be positioned upright to stop upper plate 74 when pins 24 have so oriented the ends of parts 16 in the Figure 6 position.

The second position of parts 16 in passageways 26 is shown in Figure 10 with the second ends of parts 16 diposed in a plate below the lower face of plate 10 in position to be coated. A second stop 94 pivotally mounted on stripper plate 92 can be positioned in upright position to stop upper press plate 74 when the Figure 10 position of the ends of parts 16 is reached. Two Figure 10 type operations can be substituted for a Figure 6 and Figure 10 type operation, i.e., if a Figure 10 operation is conducted and then the plate 10 is inverted and the operation repeated, both ends of parts will have been disposed in position to be coated.

An assortment of shims can be substituted for the pivoted stops 90, 94. Such shims would be interposed between stripper plate 92 and upper press plate 74.

Stripper plate 92 is supported on upper press plate 74 by rods 100 slidably mounted in openings 102 in plate 74 and secured to stripper plate 92. The enlarged ends 104 of rods 100 act as abutments limiting downward movement of stripper plate 92 relative to upper press plate 74 to a position preferably covering the lower ends of pins 24, as in Figure 5. Plate 92 has openings 106 mating with pins 24. Compression springs 108 on rods 100 between upper press plate 74 and stripper plate 92 normally urge stripper plate 92 to the Figure 5 lower position covering pins 24. The purposes of stripper plate 92 include (a) to normally cover and protect pin pushers 24 during insertion and removal of plates 10, 12, 20, and (b) to strip part handling plate 10 from the bank of pins 24 when the press 18 is opening, as otherwise the resilient walls of passageways 26 may grip pins 24 and plate 10 may therefore tend to raise with upper press plate 74.

Part handling plate 10 is removed from press 18 after the Figures 5—6 sequence to apply coating 34 to the first end of electronic components 16, and after the Figure 10 operation to apply coating 36 to the second ends of components 16 exposed as illustrated in Figure 11. The equipment shown in Figure 8 demonstrates state-of-the-art coating equipment 30 and ovens 32, so I have shown the equipment schematically.

Plate 10 is shown schematically to be mounted on a traveling platform 109 having upstanding pins 110 fitting in alignment holes 60 in plate 10 to secure it in position. The conveying means 28 (implicitly a screw mechanism) actually would not be common to both coating station 30 and oven 32, i.e., the ends of parts 16 first would be coated and then the plate 10 would be placed on a conveyor of an oven.

As indicated, the coating mechanism 30 is of a common type having a metal roller 120, usually having a doctor blade (not shown) controlling the amount of coating passing onto roller 120 and then onto the ends of parts 16, and having a reservoir function 122 in supplying the coating material to the roller/doctor blade mechanism.

I will not further describe the coating and baking functions in applying conductive metalized coatings 34, 36 to the ends of capacitors or resistors 16. The type of coating will follow state-of-the-art materials such as a fine milled silver compound in a resin base cured by heating in an oven.

My process of orienting the parts for processing by the equipment represented in Figure 8 represents high efficiency in time consumed. Using the equipment shown in Figures 1 and 2, the example of time given before is inserting about 2000 or about 4000 parts 16 in openings 50 in part loading plate 12 in about eight to ten seconds. In the process of the Figures 5—6 operation getting ready to coat the parts with the Figure 8 equipment, an example is about ten seconds. To orient parts 16 in press 18 the second time (Figure 10), again would involve around ten seconds. Silvering the first or second ends of parts 16 can be accomplished in about ten seconds. Curing the coating in an oven may vary between about two and a half minutes and five minutes, depending on the type of silver or other compound used to coat the ends of part 16. After coating and firing, inspection can be accomplished merely by glancing at plate 10, as any uncoated ends of parts 16 would be quite evident. However, it is rare to have an uncoated part 16.

Unloading parts 16 from passageways 26 of plate 10 into recesses 86 in unloading plate 20, as demonstrated in Figure 12, is another ten second type operation. Figure 13 indicates unloading of plate 20.

The claims of this application include a plate 10 supporting a number of miniature electronic parts 16 in a multiplicity of passageways 26 extending from face to face of body 10. Each passageway 26 has resilient walls and each has a dimension smaller than the corresponding dimension of each part 16 so that when the parts 16 are forced into passageways 26 they are resiliently gripped.

Passageways 26 are shown in Figure 7 to be circular in cross-section but may have other cross-sections as long as each passageway 26 has a dimension smaller than a corresponding dimension of an associated part 16 so that the part 16 is resiliently gripped, as indicated in Figures 15, 16 and 17. Figure 15 is like Figure 7 but, along with Figure 16, indicates bores 46 of rectangular cross-sections, passageways 26 of rectangular cross-sections and parts 16 of rectangular cross-sections, in which the minor cross-section "Y" of the passageway is somewhat less than the minimum cross-section "X" of the parts 16 (according to the tolerances of parts 16) so that each part 16 is gripped at least across its minor axis by the associated passageway 26.

Figure 17 shows modified rectangular passageway cross-sections which are like those in Figures 15 and 16 except the minimum distance across the minor axes of the passageways 26 are defined by the distances between bosses or teeth 140 protruding beyond the normal sidewalls 142 of passageways 26. The parts 16 are gripped by one or more pairs of teeth 140 extending from the sides of passageways 26. In the configuration shown, two pairs of bosses are shown. In another configuration used, one pair was used, etc. The idea of the toothed or notched construction is to minimize the amount of resilient material in the walls of passageways 26 that must be displaced to force the parts into the gripping passageways. This can be a particularly desirable construction when the difference in cross-sectional widths of a part is relatively great according to the minimum and maximum tolerances of the part so that if the sides of passageway 26 are to grip a part 16 of minimum width, then a lot of resilient wall material must be displaced for a part 16 of maximum width. Obviously, the amount of wall material to be displaced is smaller with a toothed wall. Note also in these rectangular constructions of Figures 15, 16, and 17 that the cross-sectional lengths of passageways 26 can be greater than the cross-sectional lengths of parts 16, so that there is room to turn a part 16 in a passageway 26 if needed. The widths of passageways may be somewhat narrower than depicted in Figures 15—17 but the widths have been exaggerated for clarity of illustration.

**Claims**

1. A process of coating ends of a multiplicity of like miniature electronic parts (16), i.e. capacitors or resistors, comprising the steps of

loading the parts into a multiplicity of juxtaposed parallel passageways arranged in a body, by pushing said parts into said passageways until their first ends are exposed at a first end of said passageways while continuously gripping the sides of said parts, coating the exposed first ends of said parts, and coating the exposed second ends of said parts,

characterized by the additional step, after coating the exposed first ends, of pushing said parts in said passageways until their second ends are exposed at a second end, opposite said first end of said passageways while continuously gripping the sides of said parts, after which second pushing step the second coating step occurs, the length of said passageways being greater than the length of said parts between said ends to be coated.

2. The process of claim 1 including the step, prior to loading, of disposing said parts in a bank juxtaposed to one another and each aligned with one of said passageways, and pushing said parts into said passageways by using a bank of juxtaposed pushers (24) secured together to move as a bank.

3. In the process of claim 2, stripping and passageways (26) from said pushers after inserting said pushers (24) in said passageways to push said parts.

4. In the process of claim 2, stopping said bank of pushers in one position to dispose said parts with their first ends exposed and stopping said bank of pushers in a second position to dispose said parts with their second ends exposed and not stopping said bank of pushers in said first and second positions thereof in pushing said parts to unload the same.

5. A plate supporting a multiplicity of miniature electronic parts (16), i.e. capacitors or resistors, used in coating both ends of the parts, comprising a plate-like body (10) having a multiplicity of juxtaposed parallel passageways (26) extending from face to face of said body, each passageway having at least one cross-section dimension shorter than the corresponding cross-sectional dimension of each part (16),

characterized in that said passageways (26) have resilient walls from end to end of said passageways, and said resilient walls continuously resiliently grip said parts at their sides in all positions in said passageways whether protruding from either end of said passageways or whether completely contained within said passageways.

6. The plate of claim 5, wherein said passageways have a length at least one hundred and fifty percent of the length of said parts.

7. The plate of claim 5, wherein said plate-like body (10) has a planar recess (40) in each face extending throughout all but marginal areas (42) thereof and said plate-likle body has a multiplicity of juxtaposed bores (46) extending therethrough in the areas of said recesses, resilient material (48) fills said recesses and said bores except for forming said passageways which are centered in said bores, the length of said passageways being greater than the length of said parts, said body being formed of rigid material except for said resilient material filling said bores and recesses.

8. The plate of claim 5 wherein said passageways (26) and said parts (16) have cross-sections in the form of elongated rectangles, the width of the cross-sectional dimension of each passageway being shorter than the corresponding cross-sectional dimension of each part and the length of the cross-sectional dimension of each passageway being longer than the length of the corresponding cross-sectional dimension of each part so room is provided to turn parts in said passageways.

9. The plate of claim 5 wherein said passageways (26) and said parts (16) have cross-sections in the form of elongated rectangles, the long sides of the elongated passageway cross-sections having at least one pair of opposed bosses (140) extending inwardly from the normal straight parallel sidewalls (142), the distance between the ends of the bosses defining the cross-sectional dimension of each passageway being shorter than the corresponding cross-sectional dimension of each part whereby a part made to maximum tolerances will not displace as much resilient material as would be the case if bosses were not used to define the minimum passageway width.

**Patentansprüche**

1. Verfahren zum Beschichten der Enden einer Vielzahl von gleichen elektronischen Miniaturbauelementen (16), d.h. Kondensatoren oder Widerständen, bei dem die Schritte vorgesehen sind, daß die Bauelemente in eine Vielzahl von in einem Körper angeordneten nebeneinanderliegenden parallelen Durchgängen eingebracht werden, indem die Bauelemente in die Durchgänge geschoben werden, bis ihre ersten Enden an einem ersten Ende der Durchgänge freiliegen, während die Seiten der Bauelemente ständig gehalten werden, daß die freiliegenden ersten Enden der Bauelemente beschichtet werden und daß die freiliegenden zweiten Enden der Bauelemente beschichtet werden,

gekennzeichnet durch den zusätzlichen Schritt, daß nach der Beschichtung der freiliegenden ersten Ende die Bauelemente in die Durchgänge geschoben werden, bis ihre zweiten Enden an einem zweiten Ende der Durchgänge, das dem ersten Ende gegenüberliegt, freiliegen, während die Seiten der Bauelemente ständig gehalten werden, und daß nach diesem zweiten Schiebeschritt der zweite Beschichtungsschritt ausgeführt wird, wobei die Länge der Durchgänge größer als die Länge der Bauelemente zwischen den zu beschichtenden Enden ist.

2. Verfahren nach Anspruch 1, das vor dem Einbringen den Schritt enthält, daß die Bauelemente in einer Gruppe nebeneinanderliegend und jeweils zu einem der Durchgänge fluchtend angeordnet werden, und daß die Bauelemente in die Durchgänge unter Verwendung einer Gruppe aus nebeneinanderliegend angeordneten Schiebern (24) geschoben werden, die zur Bewegung als eine einheitliche Gruppe fest miteinander verbunden sind.

3. Verfahren nach Anspruch 2, bei dem die Durchgänge (26) von den Schiebern nach dem Einführen der Schieber (24) in die Durchgänge abgestreift werden, um die Bauelemente zu schieben.

4. Verfahren nach Anspruch 2, bei dem die Gruppe der Schieber in einer Position angehalten wird, um die Bauelemente mit ihren ersten Enden freiliegend anzuordnen, und bei dem die einheitliche Gruppe der Schieber in einer zweiten Position angehalten wird, un die Bauelemente mit ihren zweiten Enden freiliegen anzuordnen, und bei dem die einheitliche Gruppe der Schieber in den ersten und zweiten Positionen nicht angehalten wird, um die Bauelemente zum Austragen auszuschieben.

5. Platte zum Tragen einer Vielzahl von elektronischen Miniaturbauelementen (16), d.h. Kondensatoren oder Widerständen, die zum Beschichten beider Enden der Bauelemente verwendet wird und die einen plattenähnlichen Körper (10) aufweist, der eine Vielzahl von nebeneinanderliegend angeordneten parallelen Durchgängen (26) hat, die sich von der einen Flächen zu der anderen Fläche des Körpers erstrecken, wobei jeder Durchgang wenigstens eine Querschnittsabmessung hat, die kleiner als die entsprechende Querschnittsabmessung des jeweiligen Bauelementes (16) ist, dadurch gekennzeichnet, daß die Durchgänge (26) von einem Ende zum anderen Ende der Durchgänge federnd nachgiebige Wände haben, und daß die federnd nachgiebigen Wände ständig die Bauelemente an ihren Seiten in allen Positionen in den Durchgängen klemmen, sei es, daß sie an einem oder anderem Ende der Durchgänge vorstehen oder daß sie vollständig in den Durchgängen aufgenommen sind.

6. Platte nach Anspruch 5, bei der die Durchgänge eine Länge haben, die wenigstens 150% der Länge der Bauelemente beträgt.

7. Platte nach Anspruch 5, bei der der plattenähnliche Körper (10) in jeder Fläche eine planare Ausnehmung (40) hat, die sich über den gesamten Körper, abgesehen von den Randbereichen (42), erstreckt, daß der plattenähnliche Körper eine Vielzahl von nebeneinanderliegenden Bohrungen (46) hat, die sich in den Bereichen der Ausnehmungen durch diesen erstrecken, daß ein federnde Material (48) die Ausnehmungen und die Bohrungen, abgesehen von der Bildung der Durchgänge, die zentrisch in den Bohrungen liegen, ausfüllt, daß die Länge der Durchgänge größer als die Länge der Bauelemente ist, und daß der Körper aus einem starren Material, abgesehen von dem federnden Material, das die Bohrungen und Ausnehmungen ausfüllt, ausgebildet ist.

8. Platte nach Anspruch 5, bei der die Durchgänge (26) und die Bauelemente (16) Querschnitte in Form von länglichen Rechtecken haben, die Breite der Querschnittsabmessungen jedes Durchganges kleiner als die entsprechende Querschnittsabmessung jedes Bauteils ist und die Länge der Querschnittsabmessung jedes Durchgangs größer als die Länge der entsprechenden Querschnittsabmessung jedes Bauelementes ist, so daß Raum vorhanden ist, um Bauelemente in den Durchgängen zu drehen.

9. Platte nach Anspruch 5, bei der die Durchgänge (26) und die Bauelemente (16) Querschnitte in Form von länglichen Rechtecken haben, die langen Seiten der länglichen Durchgangsquerschnitte wenigstens ein Paar gegenüberliegender Vorsprünge (140) hat, die sich von den normalen gerade verlaufenden parallelen Seitenwänden (142) nach innen erstrecken, und bei dem der Abstand zwischen den Enden der Vorsprünge, die die Querschnittsabmessung jedes Durchganges bestimmen, kleiner als die entsprechende Querschnittsabmessung jedes Bauelements ist, wobei ein in den maximalen Toleranzen hergestelltes Bauelement nicht soviel federnd nachgiebiges Material als bei dem Fall verschiebt, bei dem Vorsprünge nicht zur Bestimmung der minimalen Durchgangsbreite verwendet werden.

**Revendications**

1. Procédé d'enduction des extrémités d'une multiplicité de composants électroniques miniatures semblables (16), c'est-à-dire de capacités ou de résistances, comprenant les étapes consistant à

charger les composants dans une multiplicité de passages parallèles juxtaposés disposés dans un châssis, en poussant les composants dans les passages jusqu'à ce que leurs premières extrémités soient apparentes à une première extrémité des passages tout en serrant continuellement les côtes des composants, enduire les premières extrémités, apparentes, des composants, et enduire les secondes extrémités apparentes des composants,

caractérisé par l'étape complémentaire qui consiste, après enduction des premières extrémités apparentes, à pousser les composants dans les passages jusqu'à ce que leurs secondes extrémités soient apparentes à une seconde extrémité des passages, opposée à la première extrémité, tout en serrant continuellement les côtés des composants, l'etape de seconde enduction intervenant après l'étape de seconde poussée, la longueur des passages étant supérieure à la longueur des composants entre les extrémités à enduire.

2. Procédé selon la revendication 1, comprenant l'étape, préalable au chargement, consistant à disposer les composants en batterie juxtaposés les uns aux autres et alignés chacun avec l'un des passages, et à pousser les composants dans les passages en utilisant une batterie de poussoirs (24) juxtaposés fixés ensemble pour se déplacer en batterie.

3. Procédé selon la revendication 2, dans lequel on extrait les poussoirs des passages (26) après introduction des poussoirs (24) dans les passages pour pousser les composants.

4. Procédé selon la revendication 2, dans lequel on arrête la batterie de poussoirs dans une première position pour disposer les composants avec leurs premières extrémités apparentes, on arrête la batterie de poussoirs dans une seconde position pour disposer les composants avec leurs secondes extrémités apparentes, et on omet d'arrêter la batterie de poussoirs dans sa première et dans sa seconde position lorsque l'on pousse les composants pour les décharger.

5. Plaque pour supporter une multiplicité de composants électroniques miniatures (16), c'est-à-dire de capacités ou de résistances, utilisée pour enduire les deux extrémités des composants, comprenant un châssis en forme de plaque (10) comportant une multiplicité de passages parallèles, juxtaposés (26) s'étendant d'une face à l'autre du châssis, la section transversale de chaque passage ayant au moins une dimension plus petite que la dimension correspondante de la section transversale de chaque composant (16), caractérisée en ce que les passages (26) comportent des parois élastiques allant d'une extrémité à l'autre des passages, et en ce que les parois élastiques serrent continuellement et élastiquement les composants sur leurs côtés dans toutes les positions à l'intérieur des passages, que les composants dépassent de l'une ou l'autre des extrémités des passages ou qu'ils soient entièrement contenus à l'intérieur des passages.

6. Plaque selon la revendication 5, dans laquelle les passages ont une longueur égale à au moins cent cinquante pour cent de la longeur des composants.

7. Plaque selon la revendication 5, dans laquelle le châssis en forme de plaque (10) comporte en évidement plan (40) sur chaque face s'étendant sur tout le châssis sauf en des zones de bord (42) de celui-ci, et une multiplicité d'alésages juxtaposés (46) s'étendant à travers le châssis dans les zones de ces évidements, tandis qu'un matériau élastique (48) remplit les évidements et les trous sauf pour former les passages qui sont centrés dans ces alésages, la longueur des passages étant supérieure à la longueur des composants, le châssis étant constitué d'un matériau rigide à l'exception du matériau élastique remplissant les alésages et les évidements.

8. Plaque selon la revendication 5, dans laquelle les passages (26) et les composants (16) ont des sections transversales en forme de rectangles allongés, la largeur de la dimension en coupe transversale de chaque passage étant plus petite que la dimension en coupe transversale correspondante de chaque composant, et la longueur de la dimension en coupe transversale de chaque passage étant supérieure à la longueur de la dimension en coupe transversale correspondante de chaque composant, de sorte qu'il est prévu de la place pour tourner des composants dans les passages.

9. Plaque selon la revendication 5, dans laquelle les passages (26) et les composants (16) ont des sections transversales en forme de rectangles allongés, les longs côtés des sections transversales allongées des passages comportant au moins deux bossages se faisant face (140) s'étendant vers l'intérieur à partir des parois latérales parallèles droites normales (142), la distance entre les extrémités des bossages, qui définit la dimension en coupe transversale de chaque passage, étant inférieure à la dimension en coupe transversale correspondante de chaque composant, de façon qu'un composant fabriqué aux tolérances maximales ne déplacera pas autant de matériau élastique que ce qu'il déplacerait si les bossages n'étaient pas utilisés pour définir la largeur minimale du passage.

Fig.1

Fig.2

VIBRATOR & VACUUM

0 078 083

Fig. 3

Fig. 4

Fig. 5

Fig. 7

2

0 078 083

Fig.6

Fig.10

Fig.9

Fig.8

3

FIG. 11

FIG. 12

FIG. 14

FIG. 13

*Fig.15*

*Fig. 16*

*Fig. 17*